# FASCICULE DE BREVET EUROPEEN

(11) **EP 3 502 905 B1**
(45) Date de publication et mention de la délivrance du brevet: **26.01.2022**
(21) Numéro de dépôt: 18214882.5
(22) Date de dépôt: 20.12.2018
(51) Int. Cl.: G06F 12/0866, G06F 12/0862, G06F 12/0888

(54) **MÉTHODE DE PRÉ-CHARGEMENT DE DONNÉES**
METHODE ZUM VORLADEN VON DATEN
METHOD FOR PRE-LOADING DATA

(30) Priorité: 20.12.2017 FR 1762659
(43) Date de publication de la demande: 26.06.2019
(73) Titulaire: Bull SAS, 78340 Les Clayes-sous-Bois (FR)
(72) Inventeur: DERR, Simon, 38600 Fontaine (FR); GORET, Gaël, 38140 La Murette (FR); PICHON, Grégoire, 38180 Seyssins (FR)
(74) Mandataire: Cabinet Camus Lebkiri

(56) Documents cités:
- CN-A- 107 168 891
- US-A1- 2012 166 734
- US-B1- 7 716 425

## Description

L'invention concerne un procédé de pré-chargement de données.

L'un des problèmes posés dans le contexte des applications nécessitant un calcul haute performance (HPC) réside dans l'accès efficace aux données. Les architectures de calcul et de stockage distribués rencontrent fréquemment des latences dues à des temps d'accès aux données importants, la vitesse de traitement des microprocesseurs étant souvent plus rapide que l'acheminement des données en mémoire centrale.

Les mémoires caches permettent d'éviter ces latences à la condition que les données nécessaires aux processeurs soient présentent dans les caches au bon moment. Cette condition peut être remplie grâce aux méthodes de pré-chargement des données. Ces pré-chargements sont des optimisations matérielles ou logicielles qui visent à placer des données dans le cache avant que le processeur ne les demande en permettant ainsi d'éviter la latence mémoire et d'augmenter les performances. Il s'agit donc de prévoir à l'avance qu'elles seront les demandes futures.

Un procédé permettant de prédire les accès futurs dans un fichier consiste à détecter une suite logique dans les accès au fichier afin de prévoir, sur la base des accès précédents, quels seront les prochains accès au fichier et mettre ceux-ci dans la mémoire cache avant qu'ils ne soient demandés par le processeur.

Ce procédé présente plusieurs inconvénients. Notamment, il ne permet pas de prendre en compte des accès multiples qui n'ont pas de relation logique entre eux. Par ailleurs il ne permet pas de prendre en compte l'évolution dynamique des accès en temps réel en se basant sur un faible volume de données.

US 2012 166 734 A1 divulgue un procédé de pré-chargement de données d'un fichier permettant de définir plusieurs sous-ensembles dans le fichier.

Un but de l'invention est donc d'améliorer les procédés de pré-chargement de données d'un fichier.

A cet effet, on prévoit selon l'invention un procédé de pré-chargement de données d'un fichier selon la revendication 1.

Ainsi, en temps réel, une séquence glissante comprenant un nombre déterminé de dernières opérations est prise en compte, et chaque opération est comptabilisée dans un sous-ensemble (aussi appelé « *bin* »). L'utilisation d'une séquence d'opérations consécutives permet de prendre en compte l'aspect temporel des accès, sans forcément tenir compte strictement de leur ordre. On peut prévoir qu'en fonction de la densité des opérations dans le temps, il est possible d'ajuster la taille de la séquence glissante.

L'indexation des opérations par sous-ensemble est effectuée par la division entière des « *offsets* » (distance séparant le début du fichier des données chargées) des opérations par la taille des sous-ensembles. On peut bien entendu prévoir que cette indexation soit réalisée par toute technique connue de l'homme du métier.

L'indentification des sous-ensembles du fichier permet de prendre en compte l'aspect spatial des accès.

Le couplage des deux caractéristiques d'accès, spatial et temporel, apporte des éléments déterminants pour effectuer une analyse multifactorielle et offrir une prédiction performante. L'analyse est ainsi effectuée en temps réel et s'appuie sur un faible volume de données.

En outre, cette méthode permet de détecter des zones à pré-charger lors d'accès dans des zones multiples (et disjointes) sans forme de régularité. Par exemple, un processus allant chercher simultanément des données dans plusieurs zones disjointes d'un fichier bénéficiera du pré-chargement dans ces zones dans la mémoire, ce qui n'est pas le cas dans les procédés de l'art antérieur.

Une fois que la zone du fichier a été chargée, les futurs accès dans cette zone bénéficieront de l'effet de cache puisque leurs données seront déjà en mémoire.

Le support de mémoire peut notamment être un support de mémoire cache.

Les opérations d'entrée et/ou de sortie effectuées par un processus donné pour un fichier donné sont obtenues par l'interception d'un ensemble de fonctions systèmes telles que read, write, pread, pwrite, open, close etc. Chacune des opérations peut être décrite par un quintuplet incluant :
- un descripteur de fichier,
- un numéro de processus actif en lecture/écriture,
- un horodatage,
- un offset (distance séparant le début du fichier des données chargées), et
- la taille des données chargées.

De manière avantageuse, le procédé comprend en outre les étapes suivantes :
- identifier au moins un groupement de sous-ensembles adjacents pour lesquels au moins une opération d'entrée et/ou de sortie a été comptée, et
- lorsque la somme des opérations comptées dans le groupement de sous-ensembles est supérieure au seuil prédéterminé, charger sur le support de mémoire au moins une zone du fichier déterminée à partir de ce groupement de sous-ensembles.

Le regroupement des sous-ensembles adjacents (ou sous-ensembles contiguës) est avantageux en ce qu'il supprime l'impact des frontières de sous-ensemble (effet de bord) dans l'identification des zones du fichier les plus accédées. De la même façon que pour les sous-ensembles, une fois que la zone du fichier a été chargée, les futurs accès dans cette zone bénéficieront de l'effet de cache puisque leurs données seront déjà en mémoire.

Avantageusement, le procédé est mis en oeuvre au cours de l'exécution d'une application.

Le procédé est ainsi mis en oeuvre en temps réel.

De manière préférée, le nombre prédéterminé des dernières opérations prises en compte est un entier compris entre 10 et 1000, de préférence entre 10 et 200.

La séquence glissante des dernières opérations exécutées a ainsi une petite taille, ce qui permet de tenir compte de l'aspect temporel et donc d'avoir un suivi dynamique des opérations exécutées. On peut prévoir que ce nombre est compris entre 30 et 170, de préférence entre 50 et 150, par exemple entre 80 et 120.

De préférence, la taille des sous-ensembles est comprise entre 1 Mo et 100 Mo, de préférence entre 1 Mo et 10 Mo.

Une petite taille de sous-ensemble permet d'obtenir plus de précision pour les zones dans lesquelles les accès sont les plus nombreux.

Avantageusement, les sous-ensembles ont la même taille.

On peut prévoir que le seuil prédéterminé déclenchant le chargement est compris entre 2 et 100 opérations, de préférence entre 4 et 10 opérations.

On peut prévoir que ce seuil est choisi parmi 1, 2, 3, 4, 5, 6, 7, 8, 9, ou 10 opérations. On peut bien entendu prévoir que ce seuil est plus élevé, par exemple entre 10 et 20. Un seuil bas permet de mettre plus de zones de fichier en mémoire, améliorant ainsi la probabilité qu'un futur accès au fichier ait lieu dans une zone pré-chargée.

De manière avantageuse, la zone du fichier est centrée sur une médiane des positions de certaines au moins des opérations concernant le sous-ensemble ou le groupement de sous-ensembles.

De préférence, la zone du fichier est centrée sur une médiane des positions des 2 à 10 dernières opérations concernant le sous-ensemble ou le groupement de sous-ensembles.

En prenant en compte seulement un petit nombre des dernières opérations exécutées, on obtient un centrage suivant la tendance des derniers accès au fichier.

Selon l'invention, en alternative au fait que la zone soit centrée sur la médiane, une position de la zone du fichier est déterminée de la manière suivante :
- identifier un nombre prédéterminé de dernières opérations d'entrée et/ou de sortie concernant le sous-ensemble ou le groupement de sous-ensembles ayant atteint le seuil prédéterminé pour déclencher le chargement et les indexer en fonction de leur ordre d'arrivée,
- déterminer par régression linéaire une droite de régression linéaire dans un repère utilisant comme coordonnées l'index des opérations et des valeurs d'offset,
- centrer la zone du fichier sur un offset déterminé par une fonction de la droite de régression linéaire pour un index supérieur à ceux des opérations qui ont permis de construire la droite.

De cette façon, on peut déterminer en temps réel une zone potentielle de lecture future. On peut prévoir que l'index supérieur à ceux des opérations qui ont permis de construire la droite est très supérieur à ces derniers, par exemple situé à 10 incréments d'index d'écart. Auquel cas, on peut déduire une zone à charger pour des opérations plus éloignées dans le temps. On peut également prévoir que l'index supérieur à ceux des opérations qui ont permis de construire la droite est directement supérieur à ces derniers, ou faiblement supérieur à ces derniers, par exemple situé à 2, 3, 4, ou 5 incréments d'index d'écart de sorte qu'on obtient une probabilité plus élevé qu'une future opération ait lieu dans la zone pré-chargée. On peut prévoir que la droite de régression linéaire est choisie comme celle qui est la meilleure au sens de la méthode des moindres carrés.

Avantageusement, la zone du fichier est le sous-ensemble ou le groupement de sous-ensembles ayant atteint le seuil prédéterminé déclenchant le chargement.

De manière préférée, la zone du fichier à charger a une taille prédéterminée allant de 1 Mo à 100 Mo.

On peut notamment prévoir que cette taille est plus grande, voire beaucoup plus grande, que la taille du sous-ensemble ou du groupement de sous-ensembles. Cela permet de prendre en compte une plus grande zone dans le fichier et donc d'améliorer les chances qu'une opération future ait lieu dans une zone pré-chargée.

De manière avantageuse, avant de charger la zone du fichier à charger, on vérifie si au moins une portion de la zone est déjà chargée sur le support de mémoire,
- dans le cas où au moins une portion de la zone du fichier est déjà présente sur le support de mémoire, la zone du fichier n'est pas chargée,
- dans le cas contraire on charge la zone du fichier sur le support de mémoire.

Ainsi, on évite de charger de manière redondante une même zone du fichier et on économise donc de l'espace sur le support de mémoire cache.

Avantageusement, le procédé comprend les étapes suivantes :
- on établit une liste qui contient les zones (5) qui ont été déjà été chargées, et
- lorsqu'une zone contenue dans cette liste est présente sur celle-ci depuis une période supérieure à un temps prédéterminé, on supprime cette zone de la liste.

Cette caractéristique est intéressante notamment dans les cas où le système de cache ne permet pas de connaitre son contenu. Une fois cette période de temps terminée, la zone pré-chargée est supprimée de la liste permettant ainsi le rafraichissement de cette même zone dans le cache. Dans un contexte de haute performance, il est préférable que ce temps soit assez court. On peut prévoir que ce temps est compris entre une et dix secondes, par exemple entre une et cinq secondes, de préférence entre une et trois secondes. On peut également prévoir un temps plus important, par exemple jusqu'à une heure.

L'invention concerne également un dispositif apte à mettre en oeuvre le procédé tel que décrit précédemment.

Il peut par exemple s'agit d'un ordinateur, d'une tablette ou d'un téléphone.

L'invention concerne également un programme d'ordinateur comprenant des instructions de code de programme pour l'exécution des étapes de procédé tel que décrit précédemment.

L'invention concerne également un support d'enregistrement électronique comprenant sous forme enregistrée des données permettant de mettre en oeuvre le procédé tel que décrit précédemment.

Enfin, l'invention concerne également un procédé de mise à disposition d'un fichier comprenant un programme tel que décrit précédemment en vue de son téléchargement sur un réseau de télécommunication.

Nous allons maintenant présenter un mode de réalisation de l'invention donné à titre d'exemple non limitatif et à l'appui des figures annexées sur lesquelles :
- la figure 1 est une représentation schématique des sous-ensembles d'un fichier selon l'invention,
- la figure 2 est une représentation schématique montrant la zone chargée à partir d'une région du fichier ayant atteint le seuil de chargement,
- la figure 3 est une représentation schématique d'un dispositif apte à mettre en œuvre le procédé selon l'invention, et
- la figure 4 est un graphique représentant une droite de régression linéaire .

Nous allons présenter un mode de réalisation de l'invention ainsi que deux exemples montrant les avantages de l'invention.

On suppose qu'on met en oeuvre le procédé dans un ordinateur 6 tel qu'un serveur ou un terminal mobile (téléphone ou tablette) comprenant un processeur 7, au moins une mémoire centrale 9 comprenant des fichiers 1 enregistrés et au moins une mémoire cache 8.

Dans un mode de réalisation du procédé selon l'invention, un fichier 1 est découpé fictivement en dix sous-ensembles 2. Tous les sous-ensembles 2 ont la même taille. On peut par exemple prévoir que chaque sous-ensemble fait 1 Mo. On peut bien entendu prévoir que les sous-ensembles ont une taille plus importante, par exemple une taille comprise entre 1 Mo et 100 Mo, voire entre 1 Mo et 50 Mo, de préférence entre 1 Mo et 10 Mo.

En temps réel, une séquence glissante de 24 opérations 3 est maintenue, et chaque opération 3 est comptée dans un sous-ensemble 2. On peut bien entendu prévoir que la séquence glissante comprend un nombre plus faible ou plus grand d'opérations, par exemple entre 10 et 200, voire entre 50 et 150, de préférence entre 80 et 120.

Dans le cas présent, on observe que deux opérations 3 ont eu lieu dans les premier, quatrième et dixième sous-ensembles 2, quatre opérations 3 ont eu lieu dans les deuxième et cinquième sous-ensemble 2, sept opérations 3 ont eu lieu dans le septième sous-ensemble 2, trois opérations 3 ont eu lieu dans le neuvième sous-ensemble 2, et aucune opération n'a eu lieu dans les troisième, sixième et huitième sous-ensembles 2.

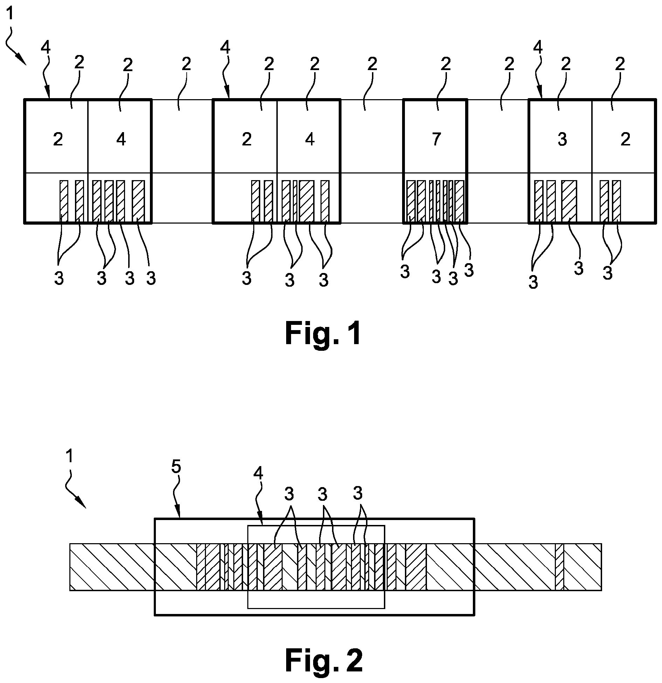

Dans le cas présent, le seuil de déclenchement du chargement d'une zone de données est de quatre opérations par sous-ensemble 2 ou groupement 4 de sous-ensembles. Sur la figure 1, les zones ayant atteint le seuil pour déclencher le chargement sont représentées encadrées.

Dans le cas présent, trois groupements 4 de sous-ensembles 2 et un sous-ensemble 2 ont atteint ce seuil de quatre opérations 3 :
- un groupement 4 de sous-ensembles 2 comprenant le premier et le deuxième sous-ensemble 2, dans lesquels respectivement deux et quatre opérations 3 ont eu lieu, soit un total de six opérations 3 pour le groupement 4 ;
- un groupement 4 de sous-ensembles 2 comprenant le troisième et le quatrième sous-ensemble 2, dans lesquels respectivement deux et quatre opérations 3 ont eu lieu, soit un total de six opérations pour le sous-ensemble 2 ;
- le septième sous-ensemble 2 dans lequel sept opérations 3 ont eu lieu ; et
- un groupement 4 de sous-ensembles 2 comprenant le neuvième et le dixième sous-ensemble dans lesquels respectivement trois et deux opérations 3 ont eu lieu, soit un total de cinq opérations pour le groupement 4.

Dans le cas présent, lorsqu'un groupement 4 de sous-ensembles 2 ou un sous-ensemble 2 atteint le seuil de chargement, la zone 5 du fichier correspondant à la taille du groupement 4 de sous-ensembles 2 ou du sous-ensemble 2 est chargée sur un support de mémoire cache. Bien entendu, on peut prévoir que ce pré-chargement a lieu sur une zone 5 plus étendue du fichier. On peut par exemple prévoir que la zone de chargement a une taille fixe qui n'est pas en relation avec la taille du groupement 4 de sous-ensembles 2 ou celle du sous-ensemble 2 (voir figure 2). Par exemple, la zone de chargement peut avoir une taille fixe comprise entre 1 Mo et 100 Mo, par exemple entre 10 et 80 Mo, voire entre 20 et 60 Mo. On peut également prévoir que la taille de la zone de chargement est variable en fonction de la taille du groupement 4 de sous-ensembles 2 ayant atteint le seuil de chargement. On peut par exemple prévoir que la taille de la zone 5 à pré-charger est proportionnelle au nombre d'opérations ayant eu lieu dans le groupement 4 de sous-ensembles 2 ou le sous-ensemble 2. On peut également prévoir que la taille de la zone 5 à pré-charger est proportionnelle au nombre de sous-ensembles 2 compris dans le groupement 4 de sous-ensembles 2 ayant atteint le seuil permettant de déclencher le chargement.

Une fois que la zone 5 a été pré-chargée sur le support de mémoire cache, les futures opérations nécessitant d'accéder à une zone du fichier compris dans la zone 5 pré-chargée seront effectuées plus rapidement puisqu'il n'y aura pas besoin d'accéder à la mémoire centrale 9.

### Exemple 1

Les inventeurs ont testé l'efficacité de la méthode selon l'invention en simulant une application demandant des petites lectures/écritures afin de montrer une diminution du nombre de zones du fichier demandées par l'application qui ne sont pas encore mis en cache et de diminuer par conséquent la latence moyenne d'accès aux données.

Les fonctions système read() et write() sont interceptées. De cette manière, la séquence de toutes les lectures et écritures peut être analysée afin de déclencher les opérations de pré-chargement.

Les performances du procédé dépendent avant tout de sa capacité à prédire, pour un processus donné, la localisation des lectures/écritures à venir.

Les cas d'usages ciblés dans cet exemple par le procédé sont ceux des petites lectures multiples (typiquement inférieure à 4 ko) non prises en charge par les optimisations des systèmes d'exploitation et de fichiers. Typiquement sont ciblées les lectures et/ou écritures (dans le cas « read-modify-write ») qui sont concentrées dans une zone mémoire, mais localement aléatoires ou de type multi-séquentiel (globalement ordonnées) avec des motifs locaux suffisamment complexes pour tromper les mécanismes d'optimisation natifs.

Pour chaque fichier ouvert (fd) par un processus donné (pid), une séquence d'opérations (lectures et écritures) est exécutée. Chacune de ces opérations est décrite par un triplet :
- horodatage (timestamp),
- offset (distance séparant le début du fichier des données chargées), et
- taille des données chargées.

Ces informations sont utilisées pour l'analyse en temps réel des opérations d'entrées/sorties.

Une application A est utilisée pour simuler les entrées et sorties dans un environnement contrôlé. Dix jeux de paramètres pour l'application A ont été choisis pour simuler des comportements différents :
- d : destination (fichier source)
- s : graine pour le générateur de nombre aléatoire
- N : nombre d'opérations
- w : taille d'opération
- S : taille de la zone de diffusion (ajout d'un aléa dans l'offset)
- L : nombre de départs (multi-séquentiel)
- I : taille du déplacement entre deux opérations
- r : nombre de répétions dans le cas multi-séquentiel (L > 1)
- Z : espace de travail dans le fichier.

Ces données pour les différentes analyses sont représentées dans le tableau 1 ci-dessous :

**Tableau 1 : Caractéristiques des différents tests réalisés en mode lecture.**

| **Numéro d'analyse** | **s** | **d** | **Z (en Go)** | **L** | **w (en ko)** | **S** | **I** | **N** |
|---|---|---|---|---|---|---|---|---|
| **0** | 1 | /fs1/data/ | 1000 | 1 | 4 | 0 | 4 ko | 1000000 |
| **1** | 1 | /fs1/data/ | 1000 | 1 | 128 | 1000 Go | 0 | 100000 |
| **2** | 1 | /fs1/data/ | 1000 | 4 | 4 | 0 | 4 ko | 1000000 |
| **3** | 1 | /fs1/data/ | 1000 | 4 | 4 | 10 Mo | 4 ko | 1000000 |
| **4** | 1 | /fs1/data/ | 1000 | 4 | 10 | 10 Mo | 10 Mo | 1000000 |
| **5** | 1 | /fs1/data/ | 1000 | 4 | 128 | 10 Mo | 10 Mo | 1000000 |
| **6** | 1 | /fs1/data/ | 1000 | 4 | 4 | 10 Mo | 10 Mo | 1000000 |
| **7** | 1 | /fs1/data/ | 1000 | 4 | 10 | 50 Mo | 10 Mo | 1000000 |
| **8** | 1 | /fs1/data/ | 1000 | 4 | 128 | 50 Mo | 10 Mo | 1000000 |
| **9** | 1 | /fs1/data/ | 1000 | 4 | 4 | 50 Mo | 10 Mo | 1000000 |

Les différentes analyses correspondent à différentes situations. Les analyses 0 (pur séquentiel) et 1 (pur aléatoire) sont supposées non-accélérables en lecture. En effet, le pur séquentiel est déjà bien pris en charge par le système de fichiers utilisé pour les tests, et le pur aléatoire (sur 1 To) est de nature imprédictible. Ces exemples servent de contrôle et permettent de mesurer le surcoût « overhead » en temps éventuellement dû à l'analyse.

L'analyse numéro 2 correspond à une situation dans laquelle quatre départs d'opérations séquentielles sont demandés par l'application A.

L'analyse numéro 3 correspond à la situation dans laquelle quatre départs d'opérations séquentielles sont demandés par l'application A ainsi que des petits départs locaux aléatoires.

Les analyses numéros 4, 5 et 6 correspondent à trois situations dans lesquelles quatre départs d'opérations séquentielles sont demandés par l'application A ainsi que des petits départs locaux aléatoires.

Les analyses numéros 7, 8 et 9 correspondent à trois situations dans lesquelles quatre départs d'opérations séquentielles sont demandés par l'application A ainsi que des grands départs locaux aléatoires.

Dans un premier temps, le test a été réalisé en mode lecture. Le tableau 2 compile les temps des dix exécutions de référence (instrumentées mais non optimisées) comparés aux exécutions instrumentées et optimisées par le procédé selon l'invention.

**Tableau 2 : Résultats des tests en mode lecture.**

| **Numéro d'analyse** | **Temps de référence (en seconde)** | **Temps optimisé par la méthode selon l'invention (en secondes)** | **Facteur d'accélération** |
|---|---|---|---|
| **0** | 15.975 | 16.288 | 0.98 |
| **1** | 846.342 | 842.762 | 1.00 |
| **2** | 351.198 | 20.392 | 17.22 |
| **3** | 297.440 | 19.968 | 14.90 |
| **4** | 480.971 | 26.066 | 18.45 |
| **5** | 485.708 | 26.349 | 18.43 |
| **6** | 587.903 | 27.445 | 21.42 |
| **7** | 962.705 | 26.675 | 36.09 |
| **8** | 983.861 | 26.615 | 36.97 |
| **9** | 988.505 | 27.832 | 35.52 |

Les analyses 2 à 9 démontrent significativement l'efficacité de la méthode pour obtenir une accélération. On obtient ainsi des facteurs d'accélération allant de 17 à 35 fois plus rapide lorsque le procédé selon l'invention est utilisé.

Des tests ont également été réalisés en mode écriture. Les inventeurs se sont plus particulièrement intéressés aux cas d'écritures non-alignés sur une taille de page de 4 ko. Le mécanisme d'écriture se compose de trois étapes principales : « lecture - modification - écriture ». Ainsi, la méthode développée pour les petites lectures peut également aider à accélérer les cas « lecture - modification - écriture ».

Pour ces tests, seules les trois premières conditions (analyses 0, 1 et 2) ont été modifiées afin de respecter la condition non-alignée sur les pages de 4 ko. Les conditions des tests sont résumées dans le tableau 3.

**Tableau 3 : Caractéristiques des différents tests réalisés en mode écriture.**

| **Numéro d'analyse** | **s** | **d** | **Z (en Go)** | **L** | **w (en ko)** | **S** | **I** | **N** |
|---|---|---|---|---|---|---|---|---|
| **0** | 1 | /fs2/data/ | 1000 | 1 | 128 | 0 | 128 ko | 1000000 |
| **1** | 1 | /fs2/data/ | 1000 | 1 | 128 | 1000 Go | 0 | 100000 |
| **2** | 1 | /fs2/data/ | 1000 | 4 | 128 | 0 | 128 ko | 1000000 |
| **3** | 1 | /fs2/data/ | 1000 | 4 | 4 | 10 Mo | 4 ko | 1000000 |
| **4** | 1 | /fs2/data/ | 1000 | 4 | 10 | 10 Mo | 10 Mo | 1000000 |
| **5** | 1 | /fs2/data/ | 1000 | 4 | 128 | 10 Mo | 10 Mo | 1000000 |
| **6** | 1 | /fs2/data/ | 1000 | 4 | 4 | 10 Mo | 10 Mo | 1000000 |
| **7** | 1 | /fs2/data/ | 1000 | 4 | 10 | 50 Mo | 10 Mo | 1000000 |
| **8** | 1 | /fs2/data/ | 1000 | 4 | 128 | 50 Mo | 10 Mo | 1000000 |
| **9** | 1 | /fs2/data/ | 1000 | 4 | 4 | 50 Mo | 10 Mo | 1000000 |

Le temps d'exécution et le nombre de requêtes de lecture produites dans les cas accélérés et non-accélérés par le procédé selon l'invention sont présentés dans le tableau 4.

**Tableau 4 : Résultats des tests en mode lecture.**

| **Numéro d'analyse** | **Temps non accélérés (en seconde)** | **Temps accélérés (en seconde)** | **Facteur d'accélération** |
|---|---|---|---|
| **0** | 29.675 | 29.302 | 1.01 |
| **1** | 103.328 | 96.358 | 1.07 |
| **2** | 32.372 | 16.932 | 1.91 |
| **3** | 246.489 | 50.951 | 4.84 |
| **4** | 573.069 | 64.410 | 8.90 |
| **5** | 620.080 | 69.194 | 8.96 |
| **6** | 846.823 | 111.298 | 7.61 |
| **7** | 928.966 | 66.551 | 13.96 |
| **8** | 949.924 | 66.236 | 14.34 |
| **9** | 1279.661 | 99.522 | 12.86 |

On peut constater que la méthode a bien amélioré le temps d'exécution dans le cas des tests 2 à 9. Cela montre que la méthode a joué un rôle important en réduisant le temps de lecture à partir d'une page cache. Les analyses 0 (pur séquentiel) et 1 (pur aléatoire) ont le même comportement dans le cas de la lecture. C'est-à-dire que, dans les cas non-accélérables, il n'y a pas de surcoût important dû à l'analyse.

### Exemple 2

Dans cet exemple, on cherche à déterminer la zone 5 de fichier 1 qui va être chargée en se basant sur la tendance des dernières opérations 3 effectuées dans un sous-ensemble 2 ou groupement 4 de sous-ensembles 2.

Pour cela, on identifie les N dernières opérations 3 concernant ce sous-ensemble 2 ou groupement 4 de sous-ensembles 2. Ces opérations sont indexées selon leur ordre d'arrivée. Dans le cas présent, N est égal à 20. Ainsi, ces 20 opérations ont des index respectifs de 1 à 20 par incrément de 1. On peut bien entendu prévoir que N soit différent de 20, par exemple compris entre 5 et 100.

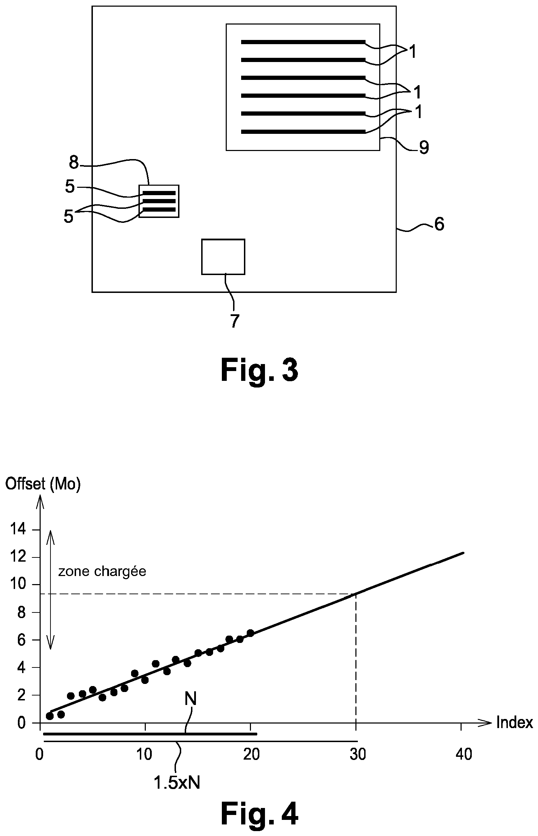

Le graphique sur lequel ces opérations 3 sont représentées est représenté en figure 4. L'axe des ordonnées de ce graphique représente les offsets des opérations 3 en Mo et l'axe des abscisses représente l'index de ces opérations 3.

Une analyse par régression linéaire est effectuée et la droite de régression qui est la meilleure au sens de la méthode des moindres carrés est retenue. L'équation de la droite de régression linéaire est la suivante : y = ax + b. Les paramètres résultant de ce calcul permettent d'inférer une zone potentielle de lectures futures par l'évaluation de la fonction de cette droite pour un index supérieur et comprenant par exemple les opérations allant jusqu'à 1,5 x N. La zone 5 à charger est centrée sur l'offset correspondant à l'index prédit par la droite (ou équation) de régression pour la 1,5 x N opération.

La taille de la zone chargée (représentée par la double flèche sur le graphique est prédéterminée. Dans le cas présent, elle représente environ 8 Mo.

## Revendications

1. Procédé de pré-chargement de données d'un fichier (1) comprenant les étapes suivantes :
- définir plusieurs sous-ensembles (2) de tailles prédéterminées dans un fichier (1),
- pour chaque opération (3) d'entrée et/ou de sortie exécutée sur le fichier (1), déterminer le sous-ensemble (2) concerné par l'opération (3),
- compter le nombre d'opérations (3) d'entrée et/ou de sortie exécutées dans chaque sous-ensemble (2) du fichier (1) en prenant en compte uniquement un nombre prédéterminé de dernières opérations (3) sur l'ensemble du fichier (1), et
- lorsque la somme des opérations (3) comptées dans un sous-ensemble (2) est supérieure à un seuil prédéterminé, charger sur un support (8) de mémoire au moins une zone (5) du fichier (1) déterminée à partir de ce sous-ensemble (2), **caractérisé en ce que** la zone (5) du fichier (1) est centrée sur une médiane des positions de certaines au moins des opérations (3) concernant le sous-ensemble (2) ou une position de la zone (5) du fichier (1) est déterminée de la manière suivante :
- identifier un nombre prédéterminé de dernières opérations (3) d'entrée et/ou de sortie concernant le sous-ensemble (2) ayant atteint le seuil prédéterminé pour déclencher le chargement et les indexer en fonction de leur ordre d'arrivée,
- déterminer par régression linéaire une droite de régression linéaire dans un repère utilisant comme coordonnées l'index des opérations (3) et des valeurs d'offset,
- centrer la zone (5) du fichier (1) sur un offset déterminé par une fonction de la droite de régression linéaire pour un index supérieur à ceux des opérations (3) qui ont permis de construire la droite.

2. Procédé selon la revendication précédente, comprenant en outre les étapes suivantes
- identifier au moins un groupement (4) de sous-ensembles (2) adjacents pour lesquels au moins une opération (3) d'entrée et/ou de sortie a été comptée, et
- lorsque la somme des opérations (3) comptées dans le groupement de sous-ensembles (2) est supérieure au seuil prédéterminé, charger sur le support (8) de mémoire au moins une zone (5) du fichier (1) déterminée à partir de ce groupement (4) de sous-ensembles (2).

3. Procédé selon l'une quelconque des revendications précédentes, mis en œuvre au cours de l'exécution d'une application.

4. Procédé selon l'une quelconque des revendications précédentes, dans lequel le nombre prédéterminé des dernières opérations (3) prises en compte est un entier compris entre 10 et 1000, de préférence entre 10 et 200.

5. Procédé selon l'une quelconque des revendications précédentes, dans lequel la taille des sous-ensembles (2) est comprise entre 1 Mo et 100 Mo, de préférence entre 1 Mo et 10 Mo.

6. Procédé selon l'une quelconque des revendications précédentes, dans lequel les sous-ensembles (2) ont la même taille.

7. Procédé selon l'une quelconque des revendications précédentes, dans lequel le seuil prédéterminé déclenchant le chargement est compris entre 2 et 100 opérations (3), de préférence entre 4 et 10 opérations (3).

8. Procédé selon l'une quelconque des revendications 2 à 7, dans lequel la zone (5) du fichier (1) est centrée sur une médiane des positions de certaines au moins des opérations (3) concernant le groupement (4) de sous-ensembles (2).

9. Procédé selon l'une quelconque des revendications 2 à 8, dans lequel une position de la zone (5) du fichier (1) est déterminée de la manière suivante :
- identifier un nombre prédéterminé de dernières opérations (3) d'entrée et/ou de sortie concernant le groupement (4) de sous-ensembles ayant atteint le seuil prédéterminé pour déclencher le chargement et les indexer en fonction de leur ordre d'arrivée,
- déterminer par régression linéaire une droite de régression linéaire dans un repère utilisant comme coordonnées l'index des opérations (3) et des valeurs d'offset,
- centrer la zone (5) du fichier (1) sur un offset déterminé par une fonction de la droite de régression linéaire pour un index supérieur à ceux des opérations (3) qui ont permis de construire la droite.

10. Procédé selon l'une quelconque des revendications 2 à 8, dans lequel la zone (5) du fichier (1) est le sous-ensemble (2) ou le groupement (4) de sous-ensembles (2) ayant atteint le seuil prédéterminé déclenchant le chargement.

11. Procédé selon l'une quelconque des revendications 1 à 9, dans lequel la zone (5) du fichier (1) à charger a une taille prédéterminée allant de 1 Mo à 100 Mo.

12. Procédé selon l'une quelconque des revendications précédentes, dans lequel :
- avant de charger la zone (5) du fichier (1), on vérifie si au moins une portion de la zone (5) est déjà chargée sur le support (8) de mémoire,
- dans le cas où au moins une portion de la zone (5) du fichier (1) est déjà présente sur le support (8) de mémoire, on ne charge pas la zone (5) du fichier (1),
- dans le cas contraire, on charge la zone (5) du fichier (1) sur le support (8) de mémoire.

13. Procédé selon l'une quelconque des revendications précédentes, dans lequel :
- on établit une liste qui contient les zones (5) qui ont déjà été chargées, et
- lorsqu'une zone (5) contenue dans cette liste est présente sur celle-ci depuis une période supérieure à un temps prédéterminé, on supprime cette zone (5) de la liste.

14. Dispositif (6) apte à mettre en œuvre le procédé selon l'une quelconque des revendications 1 à 13, comprenant :
- des moyens pour définir plusieurs sous-ensembles (2) de tailles prédéterminées dans un fichier (1),
- des moyens pour déterminer, pour chaque opération (3) d'entrée et/ou de sortie exécutée sur le fichier (1), le sous-ensemble (2) concerné par l'opération (3),
- des moyens pour compter le nombre d'opérations (3) d'entrée et/ou de sortie exécutées dans chaque sous-ensemble (2) du fichier (1) en prenant en compte uniquement un nombre prédéterminé de dernières opérations (3) sur l'ensemble du fichier (1), et
- des moyens pour, lorsque la somme des opérations (3) comptées dans un sous-ensemble (2) est supérieure à un seuil prédéterminé, charger sur un support (8) de mémoire au moins une zone (5) du fichier (1) déterminée à partir de ce sous-ensemble (2), **caractérisé en ce que** la zone (5) du fichier (1) est centrée sur une médiane des positions de certaines au moins des opérations (3) concernant le sous-ensemble (2) ou le dispositif comprend en outre des moyens pour déterminer une position de la zone (5) du fichier (1) en :
∘ identifiant un nombre prédéterminé de dernières opérations (3) d'entrée et/ou de sortie concernant le sous-ensemble (2) ayant atteint le seuil prédéterminé pour déclencher le chargement et les indexer en fonction de leur ordre d'arrivée,
∘ déterminant par régression linéaire une droite de régression linéaire dans un repère utilisant comme coordonnées l'index des opérations (3) et des valeurs d'offset,
∘ centrant la zone (5) du fichier (1) sur un offset déterminé par une fonction de la droite de régression linéaire pour un index supérieur à ceux des opérations (3) qui ont permis de construire la droite.

15. Programme d'ordinateur (6) comprenant des instructions de code de programme pour l'exécution des étapes de procédé selon l'une quelconque des revendications 1 à 13 lorsque ledit programme est exécuté sur un ordinateur (6).

16. Support d'enregistrement électronique lisible par un ordinateur (6) comprenant sous forme enregistrée des instructions de code de programme permettant de mettre en œuvre le procédé selon l'une quelconque des revendications 1 à 13 lorsque ledit programme est exécuté sur un ordinateur (6).

## Patentansprüche

1. Verfahren zum Vorladen von Daten aus einer Datei (1), umfassend folgende Schritte:
- definieren mehrerer Teilmengen (2) vorbestimmter Größen in einer Datei (1),
- für jede Eingabe- und/oder Ausgabeoperation (3), die an der Datei (1) durchgeführt wird, bestimmen der von der Operation (3) betroffenen Teilmenge (2),
- zählen der Anzahl von Eingabe- und/oder Ausgabeoperationen (3), die in jeder Teilmenge (2) der Datei (1) ausgeführt werden, wobei nur eine vorbestimmte Anzahl von letzten Operationen (3) an der Gesamtheit der Datei (1) berücksichtigt wird, und
- wenn die Summe der in einer Teilmenge (2) gezählten Operationen (3) größer als ein vorbestimmter Schwellenwert ist, laden mindestens eines Bereichs (5) der Datei (1), der aus dieser Teilmenge (2) bestimmt wird, auf ein Speichermedium (8), **dadurch gekennzeichnet, dass** der Bereich (5) der Datei (1) auf einen Median der Positionen mindestens einiger der Operationen (3) zentriert ist, die sich auf die Teilmenge (2) beziehen, oder eine Position des Bereichs (5) der Datei (1) auf folgende Weise bestimmt wird:
- identifizieren einer vorbestimmten Anzahl von letzten Eingabe- und/oder Ausgabeoperationen (3) in Bezug auf die Teilmenge (2), die den vorbestimmten Schwellenwert erreicht hat, um das Laden auszulösen und sie in Abhängigkeit der Reihenfolge ihres Eintreffens zu indizieren,
- bestimmen, durch lineare Regression, einer linearen Regressionsgeraden in einem Bezugssystem unter Verwendung des Index der Operationen (3) und der Offset-Werte als Koordinaten,
- zentrieren des Bereichs (5) der Datei (1) auf einen Offset, der durch eine Funktion der linearen Regressionsgeraden für einen Index bestimmt wird, der größer ist als die der Operationen (3), die das konstruieren der Geraden ermöglicht haben.

2. Verfahren nach vorstehendem Anspruch, ferner umfassend folgende Schritte:
- identifizieren mindestens einer Gruppierung (4) benachbarter Teilmengen (2), für die mindestens eine Eingabe- und/oder Ausgabeoperation (3) gezählt wurde, und
- wenn die Summe der in der Gruppierung von Teilmengen (2) gezählten Operationen (3) größer als ein vorbestimmter Schwellenwert ist, laden mindestens eines Bereichs (5) der Datei (1), der aus dieser Gruppierung (4) von Teilmengen (2) bestimmt wird, auf ein Speichermedium (8).

3. Verfahren nach einem der vorstehenden Ansprüche, das während der Ausführung einer Anwendung durchgeführt wird.

4. Verfahren nach einem der vorstehenden Ansprüche, wobei die vorbestimmte Anzahl der letzten berücksichtigten Operationen (3) eine ganze Zahl zwischen 10 und 1000, vorzugsweise zwischen 10 und 200 ist.

5. Verfahren nach einem der vorstehenden Ansprüche, wobei die Größe der Teilmengen (2) zwischen 1 MB und 100 MB, vorzugsweise zwischen 1 MB und 10 MB liegt.

6. Verfahren nach einem der vorstehenden Ansprüche, wobei die Teilmengen (2) die gleiche Größe haben.

7. Verfahren nach einem der vorstehenden Ansprüche, wobei der vorbestimmte Schwellenwert, der das Laden auslöst, zwischen 2 und 100 Operationen (3), vorzugsweise zwischen 4 und 10 Operationen (3) liegt.

8. Verfahren nach einem der Ansprüche 2 bis 7, wobei der Bereich (5) der Datei (1) auf einen Median der Positionen mindestens einiger der Operationen (3) zentriert ist, die sich auf die Gruppierung (4) von Teilmengen (2) beziehen.

9. Verfahren nach einem der Ansprüche 2 bis 8, wobei eine Position des Bereichs (5) der Datei (1) auf folgende Weise bestimmt wird:
- identifizieren einer vorbestimmten Anzahl von letzten Eingabe- und/oder Ausgabeoperationen (3) in Bezug auf die Gruppierung (4) von Teilmengen, die den vorbestimmten Schwellenwert erreicht hat, um das Laden auszulösen und sie in Abhängigkeit der Reihenfolge ihres Eintreffens zu indizieren,
- bestimmen, durch lineare Regression, einer linearen Regressionsgeraden in einem Bezugssystem unter Verwendung des Index der Operationen (3) und der Offset-Werte als Koordinaten,
- zentrieren des Bereichs (5) der Datei (1) auf einen Offset, der durch eine Funktion der linearen Regressionsgeraden für einen Index bestimmt wird, der größer ist als die der Operationen (3), die das konstruieren der Geraden ermöglicht haben.

10. Verfahren nach einem der Ansprüche 2 bis 8, wobei der Bereich (5) der Datei (1) die Teilmenge (2) oder die Gruppierung (4) von Teilmengen (2) ist, die den vorbestimmten Schwellenwert erreicht haben, der das Laden auslöst.

11. Verfahren nach einem der Ansprüche 1 bis 9, wobei der Bereich (5) der zu ladenden Datei (1) eine vorbestimmte Größe im Bereich von 1 MB bis 100 MB aufweist.

12. Verfahren nach einem der vorstehenden Ansprüche, wobei:
- vor dem Laden des Bereichs (5) der Datei (1) geprüft wird, ob zumindest ein Teil des Bereichs (5) bereits auf dem Speichermedium (8) geladen ist,
- für den Fall, dass zumindest ein Teil des Bereichs (5) der Datei (1) bereits auf dem Speichermedium (8) vorhanden ist, der Bereich (5) der Datei (1) nicht geladen wird,
- andernfalls der Bereich (5) der Datei (1) auf das Speichermedium (8) geladen wird.

13. Verfahren nach einem der vorstehenden Ansprüche, wobei:
- eine Liste erstellt wird, welche die bereits geladenen Bereiche (5) enthält, und
- wenn ein in dieser Liste enthaltener Bereich (5) länger als ein vorgegebener Zeitraum in der Liste vorhanden ist, dieser Bereich (5) aus der Liste gelöscht wird.

14. Vorrichtung (6), die zum Durchführen des Verfahrens nach einem der Ansprüche 1 bis 13 geeignet ist, umfassend:
- Mittel zum definieren mehrerer Teilmengen (2) vorbestimmter Größen in einer Datei (1),
- Mittel zum bestimmen, für jede Eingabe- und/oder Ausgabeoperation (3) an der Datei (1), der von der Operation (3) betroffenen Teilmenge (2),
- Mittel zum zählen der Anzahl von Eingabe- und/oder Ausgabeoperationen (3), die in jeder Teilmenge (2) der Datei (1) ausgeführt werden, wobei nur eine vorbestimmte Anzahl von letzten Operationen (3) an der Gesamtheit Datei (1) berücksichtigt wird, und
- Mittel zum laden mindestens eines Bereichs (5) der Datei (1), der aus dieser Teilmenge (2) bestimmt wird, auf ein Speichermedium (8), wenn die Summe der in einer Teilmenge (2) gezählten Operationen (3) größer als ein vorbestimmter Schwellenwert ist, **dadurch gekennzeichnet, dass** der Bereich (5) der Datei (1) auf einen Median der Positionen mindestens einiger der Operationen (3) zentriert ist, die sich auf die Teilmenge (2) beziehen, oder die Vorrichtung ferner Mittel umfasst, um eine Position des Bereichs (5) der Datei (1) zu bestimmen durch:
∘ identifizieren einer vorbestimmten Anzahl von letzten Eingabe- und/oder Ausgabeoperationen (3) in Bezug auf die Teilmenge (2), die den vorbestimmten Schwellenwert erreicht hat, um das Laden auszulösen und sie in Abhängigkeit der Reihenfolge ihres Eintreffens zu indizieren,
∘ bestimmen, durch lineare Regression, einer linearen Regressionsgeraden in einem Bezugssystem unter Verwendung des Index der Operationen (3) und der Offset-Werte als Koordinaten,
∘ zentrieren des Bereichs (5) der Datei (1) auf einen Offset, der durch eine Funktion der linearen Regressionsgeraden für einen Index bestimmt wird, der größer ist als die der Operationen (3), die das Konstruieren der Geraden ermöglicht haben.

15. Computerprogramm (6) mit Programmcodeanweisungen zum Ausführen der Schritte des Verfahrens nach einem der Ansprüche 1 bis 13, wenn das Programm auf einem Computer (6) ausgeführt wird.

16. Elektronisches Aufzeichnungsmedium, das von einem Computer (6) gelesen werden kann, umfassend Programmcodeanweisungen in aufgezeichneter Form zum Durchführen des Verfahrens nach einem der Ansprüche 1 bis 13, wenn das Programm auf einem Computer (6) ausgeführt wird.

## Claims

1. A method for preloading data of a file (1), comprising the following steps:
- defining a plurality of bins (2) of predetermined sizes in a file (1),
- for each input and/or output operation (3) executed on the file (1), determining the bin (2) involved in the operation (3),
- counting the number of input and/or output operations (3) executed in each bin (2) of the file (1) by taking into account only a predetermined number of last operations (3) on the whole file (1), and
- when the sum of the operations (3) counted in one bin is greater than a predetermined threshold, loading, in a memory medium (8), at least one area (5) of the file (1) determined on the basis of this bin (2), **characterized in that** the area (5) of the file (1) is centered on a median of positions of at least some of the operations (3) involving the bin (2) or a position of the area (5) of the file (1) is determined as follows:
- identifying a predetermined number of last input and/or output operations (3) involving the bin (2) that has reached the predetermined threshold for triggering loading and indexing them according to their order of arrival,
- determining by linear regression a linear regression line in a reference frame using the index of the operations (3) and of offset values as coordinates,
- centering the area (5) of the file (1) on an offset determined by a function of the linear regression line for an index greater than those of the operations (3) that made it possible to determine the line.

2. The method according to the preceding claim, furthermore comprising the following steps:
- identifying at least one group (4) of adjacent bins (2) for which at least one input and/or output operation (3) has been counted, and
- when the sum of the operations (3) counted in the group of bins (2) is greater than the predetermined threshold, loading, in the memory medium (8), at least one area (5) of the file (1) determined on the basis of this group (4) of bins (2).

3. The method according to any of the preceding claims, implemented during the execution of an application.

4. The method according to any of the preceding claims, wherein the predetermined number of last operations (3) taken into account is an integer between 10 and 1000, preferentially between 10 and 200.

5. The method according to any of the preceding claims, wherein the size of the bins (2) is between 1 MB and 100 MB, preferentially between 1 MB and 10 MB.

6. The method according to any of the preceding claims, wherein the bins (2) have the same size.

7. The method according to any of the preceding claims, wherein the predetermined threshold triggering loading is between 2 and 100 operations (3), preferentially between 4 and 10 operations (3).

8. The method according to any of claims 2 to 7, wherein the area (5) of the file (1) is centered on a median of positions of at least some of the operations (3) involving the group (4) of bins (2).

9. The method according to any of claims 2 to 8, wherein a position of the area (5) of the file (1) is determined as follows:
- identifying a predetermined number of last input and/or output operations (3) involving the group (4) of bins that has reached the predetermined threshold for triggering loading and indexing them according to their order of arrival,
- determining by linear regression a linear regression line in a reference frame using the index of the operations (3) and of offset values as coordinates,
- centering the area (5) of the file (1) on an offset determined by a function of the linear regression line for an index greater than those of the operations (3) that made it possible to determine the line.

10. The method according to any of claims 2 to 8, wherein the area (5) of the file (1) is the bin (2) or the group (4) of bins (2) that has reached the predetermined threshold triggering loading.

11. The method according to any of claims 1 to 9, wherein the area (5) of the file (1) to be loaded has a predetermined size ranging from 1 MB to 100 MB.

12. The method according to any of the preceding claims, wherein:
- before loading the area (5) of the file (1), it is checked whether at least one portion of the area (5) is already loaded in the memory medium (8),
- if at least one portion of the area (5) of the file (1) is already present in the memory medium (8), the area (5) of the file (1) is not loaded,
- if not, the area (5) of the file (1) is loaded in the memory medium (8).

13. The method according to any of the preceding claims, wherein:
- a list that contains the areas (5) that have already been loaded is drawn up, and
- when an area (5) contained in this list is present on said list for a period greater than a predetermined time, this area (5) is deleted from the list.

14. A device able to implement the method according to any of claims 1 to 13, comprising:
- means for defining a plurality of bins (2) of predetermined sizes in a file (1),
- means for determining, for each input and/or output operation (3) executed on the file (1), the bin (2) involved in the operation (3),
- means for counting the number of input and/or output operations (3) executed in each bin (2) of the file (1) by taking into account only a predetermined number of last operations (3) on the whole file (1), and
- means for, when the sum of the operations (3) counted in one bin is greater than a predetermined threshold, loading, in a memory medium (8), at least one area (5) of the file (1) determined on the basis of this bin (2), **characterized in that** the area (5) of the file (1) is centered on a median of positions of at least some of the operations (3) involving the bin (2) or the device comprises furthermore means for determining a position of the area (5) of the file (1) by:
- identifying a predetermined number of last input and/or output operations (3) involving the bin (2) that has reached the predetermined threshold for triggering loading and indexing them according to their order of arrival,
- determining by linear regression a linear regression line in a reference frame using the index of the operations (3) and of offset values as coordinates,
- centering the area (5) of the file (1) on an offset determined by a function of the linear regression line for an index greater than those of the operations (3) that made it possible to determine the line.

15. A computer (6) program comprising program code instructions for executing the steps of the method according to according to any of claims 1 to 13 wherein said program is executed on a computer (6).

16. A computer (6)-readable electronic recording medium comprising program code instructions, in recorded form, for implementing the method according to any of claims 1 to 13 wherein said program is executed on a computer (6).
